# EUROPEAN PATENT APPLICATION

(11) **EP 4 703 922 A1**
(43) Date of publication of application: **04.03.2026**
(21) Application number: 24796911.6
(22) Date of filing: 18.04.2024
(51) Int. Cl.: G06F 21/33, G06F 21/16

(54) **AVATAR MANAGEMENT SYSTEM, AVATAR MANAGEMENT METHOD, AND PROGRAM**

(30) Priority: 27.04.2023 JP 2023073413
(71) Applicant: Toppan Holdings Inc., Tokyo 110-0016 (JP)
(72) Inventor: KOIKE, Yuko, Tokyo 110-0016 (JP); KANEYAMA, Chihiro, Tokyo 110-0016 (JP)
(74) Representative: Hoffmann Eitle
(86) International application number: PCT/JP2024/015414
(87) International publication number: WO 2024/225158

(57) **Abstract**

An avatar management system includes an authentication object generation section that generates an authentication object that certifies predetermined matters related to an avatar that can be used in a network service provided on a network; and an object authenticity certification information assignment section that assigns object authenticity certification information that certifies authenticity of the authentication object generated by the authentication object generation section.

## Description

### [Technical Field]

The present invention relates to avatar management systems, avatar management methods, and programs.

The present application claims the benefit of priority from Japanese Patent Application No. 2023-073413 filed in Japan on April 27, 2023, the contents of which are incorporated herein by reference.

### [Background Art]

There is known a technique in which the user's registration information, including the user's email address and avatar name, is managed in association with the user ID, and the user ID is also managed in association with the individual identification information related to the mobile terminal to thereby detect the identity of the user in a virtual world based on the avatar name and individual identification information associated with the user ID (e.g., see PTL 1).

### [Citation List]

### [Patent Literature]

PTL 1: JP2011-008774A

### [Summary of the Invention]

### [Technical Problem]

Avatars acting in virtual (digital) spaces, such as the metaverse, raise issues of impersonation, unauthorized use, and the like. Therefore, it is desirable that users can easily know whether avatars in the digital space are authentic.

The present invention has been made in light of such circumstances and aims that the users can easily know whether avatars are authentic.

### [Solution to Problems]

In order to solve the above issues, an avatar management system according to an aspect of the present invention includes an authentication object generation section that generates an authentication object that certifies predetermined matters related to an avatar that can be used in a network service provided on a network; and an object authenticity certification information assignment section that assigns object authenticity certification information that certifies authenticity of the authentication object generated by the authentication object generation section.

An avatar management method according to an aspect of the present invention is an avatar management method in an avatar management system, including: an authentication object generation step in which an authentication object generation section generates an authentication object that certifies predetermined matters related to an avatar that can be used in a network service provided on a network; and an object authenticity certification information assignment step in which an object authenticity certification information assignment section assigns object authenticity certification information that certifies authenticity of the authentication object generated in the authentication object generation step.

A program according to an aspect of the present invention is a program that causes a computer in an avatar management system to function as an authentication object generation section that generates an authentication object that certifies predetermined matters related to an avatar that can be used in a network service provided on a network; and as an object authenticity certification information assignment section that assigns object authenticity certification information that certifies authenticity of the authentication object generated by the authentication object generation section.

### [Advantageous Effects of the Invention]

According to the present invention, users can easily know authenticity of avatars.

### [Brief Description of the Drawings]

Fig. 1 is a diagram illustrating a configuration example of an avatar management system according to a first embodiment.
Fig. 2 is a diagram illustrating a configuration example of an avatar generation system according to the first embodiment.
Fig. 3 is a schematic diagram illustrating a flow of avatar generation in the avatar generation system according to the first embodiment.
Fig. 4 is a diagram illustrating a hardware configuration example of an avatar management device according to the first embodiment.
Fig. 5 is a diagram illustrating a functional configuration example of the avatar management device according to the first embodiment.
Fig. 6 is a diagram illustrating an example of avatar information stored in an avatar information storage according to the first embodiment.
Fig. 7 is a diagram illustrating an example of a metafile according to the first embodiment.
Fig. 8 is a diagram illustrating an example of authentication object information according to the first embodiment.
Fig. 9 is a diagram illustrating a configuration example of a service provisioning system according to the first embodiment.
Fig. 10 is a flowchart illustrating an example of a processing procedure performed by the avatar generation system and the avatar management device in relation to avatar registration according to the first embodiment.
Fig. 11 is a flowchart illustrating an example of a processing procedure performed by the avatar management device in relation to authentication object generation according to the first embodiment.
Fig. 12 is a flowchart illustrating an example of a processing procedure performed by the service provisioning system and the avatar management device in relation to avatar data transfer according to the first embodiment.
Fig. 13 is a flowchart illustrating an example of a processing procedure performed by an end-user terminal, the service provisioning system, and the avatar management device in relation to avatar authenticity verification according to the first embodiment.
Fig. 14 is a flowchart illustrating an example of a processing procedure performed by the end-user terminal, the service provisioning system, and the avatar management device in relation to authenticity verification for an authentication object according to the first embodiment.
Fig. 15 is a flowchart illustrating an example of a processing procedure performed by the avatar management device in relation to addition of qualification authentication object according to the first embodiment.

### [Description of the Embodiments]

### <First Embodiment>

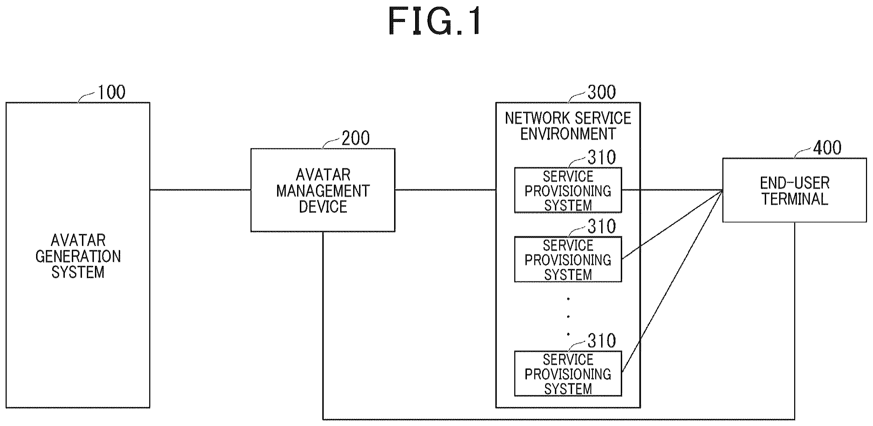

Fig. 1 is a diagram illustrating an example of an overall configuration of an avatar management system according to the present embodiment. The avatar management system of the present embodiment includes an avatar generation system 100, an avatar management device 200, a network service environment 300, and an end-user terminal 400.

The avatar generation system 100 generates an avatar used in the network service environment 300.

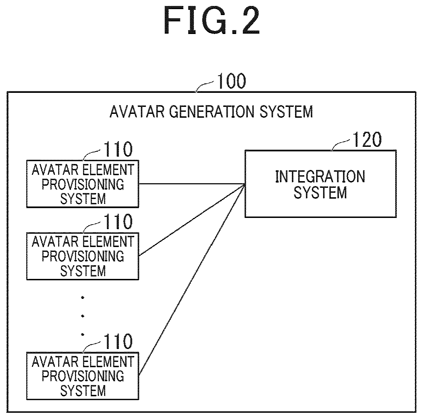

Fig. 2 is a diagram illustrating a configuration example of the avatar generation system 100. The avatar generation system 100 shown in the figure includes multiple avatar element provisioning systems 110 and a single integration system 120.

The avatar element provisioning systems 110 generate respective predetermined avatar elements among the elements constituting an avatar (avatar elements) and provide the generated avatar elements. The avatar element provisioning systems 110 may be operated, for example, by respective predetermined avatar element providing companies.

The integration system 120 acquires required avatar elements from among the avatar elements provided by the avatar element provisioning systems 110, and integrates (combines) the acquired avatar elements to generate an avatar.

In the avatar generation system 100, the avatar element provisioning systems 110 may be connected to the integration system 120 via a network.

The number of the avatar element provisioning systems 110 in the avatar generation system 100 is not particularly limited but may be at least one. Also, the number of the integration systems 120 is not particularly limited but may be at least one.

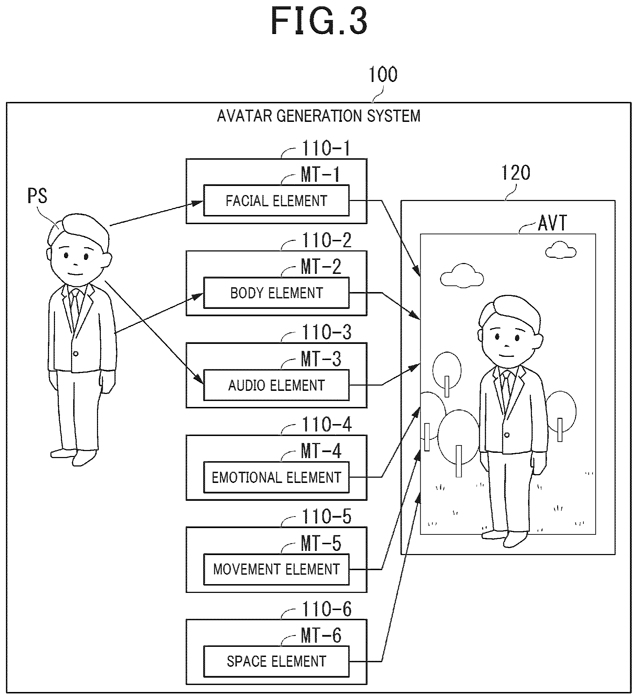

Fig. 3 is a schematic diagram illustrating a flow of avatar generation in the avatar generation system 100. This figure will be explained taking an example of generating a three-dimensional (3D) realistic avatar in the form of a person. A realistic avatar realistically reproduces the appearance of an actual person PS based on information obtained by, for example, capturing an image of a source person PS.

The avatar generation system 100 in the figure shows an example including six avatar element provisioning systems 110-1 to 110-6.

The avatar element provisioning system 110-1 generates a 3D facial (head) element as an avatar element and provides a generated facial element MT-1.

The avatar element provisioning system 110-2 generates and provides a body element MT-2 as an avatar element. The body element MT-2 is a part of a human body excluding the head. The avatar element provisioning system 110-2 may generate a body element MT-2 wearing clothes.

The avatar element provisioning system 110-3 generates and provides an audio element MT-3 as an avatar element. The audio element MT-3 is an element of the voice emitted by the avatar.

The avatar element provisioning system 110-4 generates and provides an emotional element MT-4 as an avatar element. The emotional element MT-4 includes information, for example, that changes the expression of the facial element, the movement of the body element MT-2, and the like according to each given emotion. The emotional element MT-4 allows the avatar to express emotions.

The avatar element provisioning system 110-5 generates and provides a movement element MT-5 as an avatar element. The movement element MT-5 includes information for imparting movement to the avatar. For example, if the avatar is a weather forecaster appearing in a weather forecast web content, the movement element MT-5 generated corresponding to the weather forecaster can be used for imparting the avatar with movement corresponding to the weather forecaster, such as pointing at a weather chart.

The avatar element provisioning system 110-6 generates and provides a space element MT-6 as an avatar element. The space element MT-6 is an element of the space where the avatar is present.

In the avatar generation system 100 shown in the figure, the avatar element provisioning system 110-1 captures an image of the source person PS and generates a facial element MT-1 of the source person PS. The avatar element provisioning system 110-2 captures an image of the source person PS and generates the body element MT-2 of the person PS. The avatar element provisioning system 110-3 generates the audio element MT-3 using data that is a voice record of the source person PS.

Then, the integration system 120 acquires the avatar elements (facial element MT-1, body element MT-2, audio element MT-3, emotional element MT-4, movement element MT-5, and space element MT-6) generated by the avatar element provisioning systems 110-1 to 110-6. The integration system 120 integrates the acquired avatar elements to generate an avatar AVT.

The avatar AVT does not necessarily have to be generated using all the avatar elements (the facial, body, audio, emotional, movement, and space elements) shown in the figure. In other words, the avatar AVT may be generated using part of the avatar elements shown in the figure. The avatar elements to be used when generating an avatar may be changed according to, for example, the network service in which the avatar is used.

Refer back to Fig. 1. The avatar management device 200 manages the avatar generated by the avatar generation system 100.

The avatar management device 200 stores the avatar generated by the avatar generation system 100 as a management target. The avatar management device 200 uploads the stored avatar to be managed to the network service environment 300. The network service environment 300 provides end-users with network services that use avatars.

In response to authenticity inquiries (authenticity verification requests) about the avatars used in the network services provided to end-user terminals 400, the avatar management device 200 determines the authenticity of the avatars that are the subject of the inquiries and transmits the determination results to the end-user terminals 400.

The network service environment 300 provides network services in which avatars provided with authenticity certification information in the avatar management device 200 can be used. The network service environment 300 includes at least one service provisioning system 310 that provides a predetermined network service. The service provisioning system 310 may be configured as a web or application server that has been designed, for example, according to the contents of the network service provided.

The network service provided by the service provisioning system 310 may be a website, network game, web conferencing system, etc. using an avatar. Examples of such a network service include providing weather forecasts using the avatar as a weather forecaster, medical consultations using the avatar as a medical doctor, and fortune telling using the avatar as a fortune teller.

As a network service, the service provisioning system 310 may provide a digital space in which the avatar is present. The digital space provided by the service provisioning system 310 may be a digital space such as a metaverse or a digital twin. Also, the digital space provided by the service provisioning system 310 may be a 3D or 2D web conferencing system or a digital signage. The following description will be given taking an example in which the digital space provided by the service provisioning system 310 is primarily a metaverse.

The end-user terminal 400 is used for the end-user to receive a network service from the service provisioning system 310 in the network service environment 300.

In response to the end-user's operation, the end-user terminal 400 establishes a connection with the service provisioning system 310 and outputs an application or content by display, audio, etc. according to the network service provided by the service provisioning system 310 connected. With this operation, the end-user can use the application for web conferencing, weather forecast, medical consultation, etc. mentioned above, or can view the content, for example, via the end-user terminal 400.

The avatars used for the network services provided in the network service environment of the present embodiment include realistic avatars generated by the avatar generation system 100. Since such a realistic avatar realistically reproduces the source person, the end-user who uses the network service may be given a strong sense, for example, of being in contact with the actual person from whom the avatar was generated. Since the avatar is realistically reproduced, there is a concern that unauthorized use such as falsification may often occur, including copying without permission, replacing the facial element, etc.

In light of this, it is preferable that the authenticity of an avatar used in a network service (whether the avatar has authenticity) can be verified. The expression "having authenticity" may refer to a target avatar being not an avatar, for example, that has been impersonated or used illegally by others but being an avatar under the control of a legitimate person (e.g., an end-user (or an IP holder, etc.)). Also, "having authenticity" may refer to, for example, qualifications or authority given to the avatar being genuine and legitimate.

In this regard, in the present embodiment, if an end-user has any doubts about the authenticity of an avatar used in a network service, the end-user can specify the avatar in question via the end-user terminal 400 and make an authenticity inquiry (transmit authenticity verification request), as will be described later. The end-user terminal 400 can output the determination result on authenticity in response to the inquiry, by displaying, etc. The end-user can check authenticity of the target avatar based on the determination result outputted by the end-user terminal 400.

For the end-user using the network service, it is more preferable that, for example, authenticity of the avatar, which is present in the metaverse provided by the network service, can be verified promptly and easily, in addition to the authenticity verification based on an authenticity inquiry described above.

In this regard, in the present embodiment, it may be possible to add an authentication object to an avatar. The authentication object serves as a sign of the corresponding avatar in the metaverse being authentic.

The authentication object is added to the corresponding avatar in a predetermined manner in the metaverse provided as a network service by the service provisioning system 310.

As the manner of addition, for example, the authentication object may be added as an item, such as a badge, to a predetermined position on the avatar's body, such as the chest. The authentication object may be added to the avatar as a particular piece of clothing, accessory, etc. The authentication object may also be added as a mascot or a pet that moves along with the avatar. The authentication object may be added by, for example, changing the color or transparency of the avatar.

If the authentication object is ensured to be added to an avatar in the metaverse, the end-user observing the metaverse displayed on the end-user terminal 400 can visually check the addition of the authentication object to the avatar in the metaverse. If the authentication object is added, the end-user can check that the corresponding avatar is authenticated.

In the present embodiment, one authentication object may be unambiguously associated with one avatar. Alternatively, one authentication object may be assigned to multiple avatars, depending on the item subject to authentication. Alternatively, one avatar may have multiple authentication objects which have different items subject to authentication according to the attributes of the avatar.

If one avatar is allowed to move between multiple metaverses, an authentication object common to the metaverses may be added to the avatar. Depending on the item certified by the authentication object, addition of the authentication object may be limited to a specific metaverse.

There is a possibility that the authentication object itself may be counterfeited or tampered with to create an inauthentic object and be added to an avatar.

In this regard, in the present embodiment, if the end-user has any doubts about the authenticity of an authentication object itself, the end-user can make an authenticity inquiry via the end-user terminal 400, as will be described later.

In this case also, the end-user terminal 400 can output the determination result on authenticity in response to the inquiry, by displaying, etc. The end-user can check the authenticity of the target authentication object based on the determination result outputted by the end-user terminal 400.

The end-user terminal 400 may be a personal computer, smartphone, tablet terminal, etc.

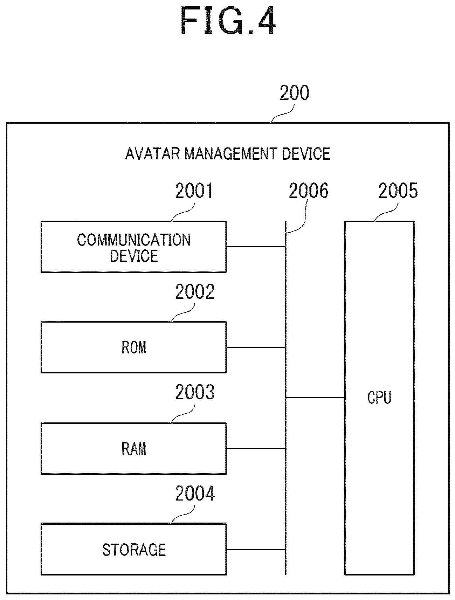

Fig. 4 is a diagram illustrating a hardware configuration of the avatar management device 200. The avatar management device 200 shown includes a communication device 2001, a read only memory (ROM) 2002, a random access memory (RAM) 2003, a storage 2004, and a central processing unit (CPU) 2005. The communication device 2001, ROM 2002, RAM 2003, storage 2004 and CPU 2005 are connected to each other via a bus 2006.

The communication device 2001 supports communication via a network.

The ROM 2002 stores non-rewritable data.

The RAM 2003 temporarily stores data used in the calculations performed by the CPU 2005.

The storage 2004 corresponds, for example, to a hard disc drive (HDD) or a solid state drive (SSD) and stores various data including program data, etc.

The CPU 2005 executes the programs stored in the storage 2004 to perform calculations according to various controls, processes, etc.

Although not shown, the avatar management device 200 may include a graphics processing unit (GPU).

Functions equivalent to those of the avatar management device 200 may be obtained via multiple network terminals distributed such that blockchain transactions can be performed.

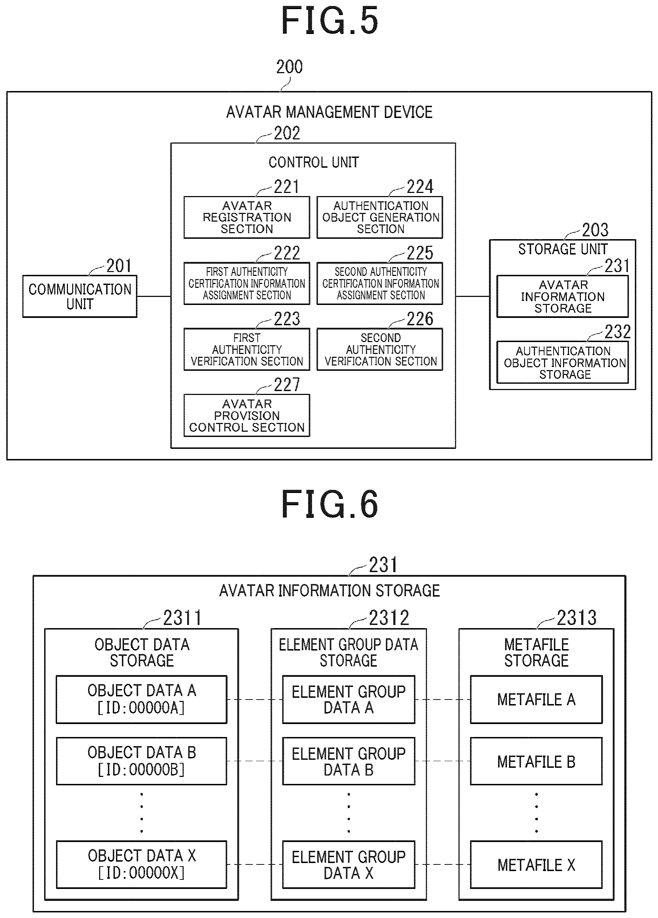

Fig. 5 is a diagram illustrating an example of a functional configuration of the avatar management device 200. The functions of the avatar management device 200 in the figure are achieved by the central processing unit (CPU) of the avatar management device 200 executing programs.

The avatar management device 200 shown in the figure includes a communication unit 201, a control unit 202, and a storage unit 203.

The communication unit 201 performs communication with the avatar generation system 100, the network service environment 300, the end-user terminal 400, and the like via a network.

The control unit 202 performs various controls in the avatar management device 200. The control unit 202 shown in the figure includes an avatar registration section 221, a first authenticity certification information assignment section 222, a first authenticity verification section 223, an authentication object generation section 224, a second authenticity certification information assignment section 225, a second authenticity verification section 226, and an avatar provision control section 227.

The avatar registration section 221 registers the avatar generated by the avatar generation system 100 as a target to be managed. The avatar is registered by having the avatar information (described later) of the avatar as a management target stored in an avatar information storage 231.

The avatar registered by the avatar registration section 221 can be used for the network service provided by the service provisioning system 310 in the network service environment 300.

The first authenticity certification information assignment section 222 assigns authenticity certification information (first authenticity certification information) certifying the avatar in question being authentic to the avatar registered by the avatar registration section 221. The authenticity certification information will be described later.

In response to the authenticity verification request for an avatar from the end-user terminal 400, the first authenticity verification section 223 makes a determination on authenticity for the avatar, which is a target of authenticity verification, using the authenticity certification information assigned to the registered avatar. The first authenticity verification section 223 transmits the result of determination on authenticity to the end-user terminal 400 that is the transmitter of the authenticity verification request.

The authentication object generation section 224 generates an authentication object to be added to the avatar registered in the avatar registration section 221. The authentication object generation section 224 stores authentication object information including the generated authentication object in an authentication object information storage 232.

If one authentication object can be assigned to multiple avatars, the authentication object generation section 224 may newly generate an authentication object for the first avatar and, for the second and the subsequent avatars, may update the authentication object information already stored in the authentication object information storage 232 so that the updated authentication object can be assigned to these avatars, without newly generating authentication objects.

The second authenticity certification information assignment section 225 assigns the authentication object with object authenticity certification information (second authenticity certification information) certifying the authentication object itself generated by the authenticity object generation section 224 as being authentic.

In response to the authenticity verification request for an authentication object from the end-user terminal 400, the second authenticity verification section 226 makes a determination on authenticity for the authentication object specified as a target of authenticity verification, using the authenticity certification information assigned to the authentication object in question. The second authenticity verification section 226 transmits the result of determination on authenticity to the end-user terminal 400 that is the transmitter of the authenticity verification request.

The avatar provision control section 227 performs control related to provision of the registered avatar (avatar information transmission) to the service provisioning system 310. The avatar management device 200 and each service provisioning system 310 may be connected via API, so that the avatar provision control section 227 can transmit avatar data to the corresponding service provisioning system 310 in the state of being connected online. When transmitting avatar data, the avatar provision control section 227 may add the authentication object associated with the avatar.

The storage unit 203 stores various types of information handled by the avatar management device 200. The storage unit 203 includes the avatar information storage 231 and the authentication object information storage 232.

The avatar information storage 231 stores avatar information.

Fig. 6 is a diagram illustrating an example of avatar information stored in the avatar information storage 231. The avatar information storage 231 shown in the figure includes an object data storage 2311, an element group data storage 2312, and a metafile storage 2313.

The avatar information corresponding to one avatar includes, for example, object data, element group data, and a metafile.

The object data storage 2311 stores object data for each registered avatar.

The element group data storage 2312 stores element group data for each registered avatar.

The metafile storage 2313 stores a metafile for each registered avatar.

The object data, the element group data, and the metafile corresponding to the same avatar are associated with each other by the same avatar ID, between the object data storage 2311, the element group data storage 2312, and the metafile storage 2313.

Specifically, object data A, element group data A, and a metafile A corresponding to an avatar A respectively stored in the object data storage 2311, the element group data storage 2312, and the metafile storage 2313 are associated with each other by an avatar ID [00000A] that unambiguously specifies the avatar A.

The object data is the data of an object entity as the corresponding avatar. The object data may be created, for example, by combining components, such as a head, a body, etc., which are generated using predetermined avatar elements.

The element group data includes at least one avatar element that imparts a predetermined mode to the avatar entity that is based on the object data. The element group data may include, for example, audio elements, emotional elements, movement elements, space elements, and the like. Using the element group data, the avatar as an object can emit voice, change the facial expressions, move, and be present in a digital space with a predetermined design.

The metafile includes at least one meta data to be assigned to the corresponding avatar.

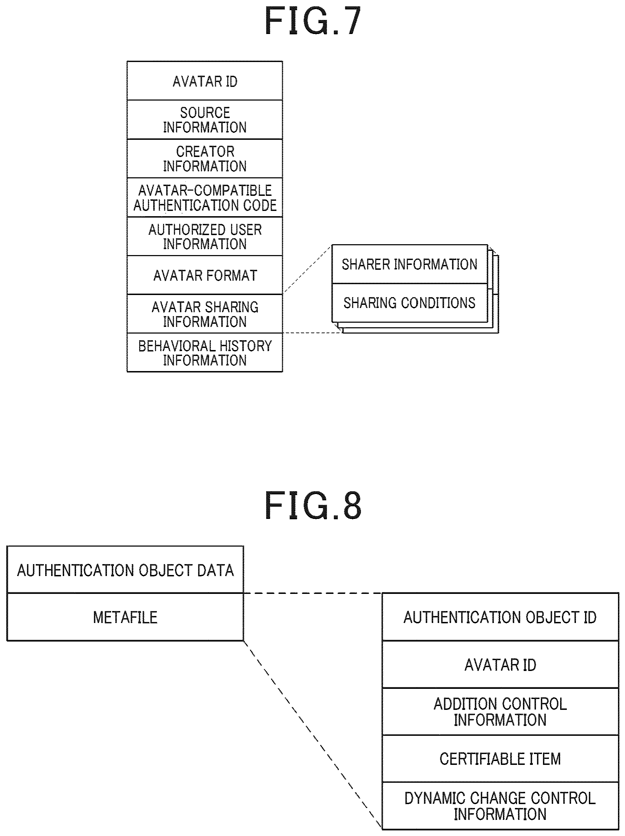

Fig. 7 is a diagram illustrating an example of the metafile corresponding to one avatar. The metafile shown in the figure includes metadata such as the avatar ID, source information, creator information, avatar-compatible authentication code, authorized user information, avatar format, avatar sharing information, and behavioral history information.

The avatar ID is an identifier unambiguously specifies the corresponding avatar. The avatar ID may be issued by the avatar registration section 221 when registering the corresponding avatar. As mentioned above, the object data, the element group data, and the metafile corresponding to the same avatar are associated with each other by the avatar ID.

The source information is the information related to the person (source) who is the origin of the corresponding avatar. The source information may include information items such as a source ID and profile information related to the source person. The source information may be provided by the avatar generation system 100.

The creator information is the information related to the person who has created the corresponding avatar. The creator may be, for example, an organization such as a company or an individual corresponding to the integration system 120 that has generated the corresponding avatar in the avatar generation system 100.

The avatar-compatible authentication code is issued by the avatar management device 200 in association with the avatar to be provided, when the service provisioning system 310 is provided with the avatar (receives avatar information transmission) from the avatar management device 200.

The authorized user information is the information related to the authorized user. The authorized user is authorized to use the corresponding avatar. The authorized user may be the end-user as a person who is the source of the avatar. In this case, the authorized user can allow the avatar with themself as a source to be present in the metaverse provided by the service provisioning system 310 and to act in the metaverse in response to the operation of the end-user terminal 400, for example. The authorized user may be an operator or the like of a particular service provisioning system 310. The authorized user information is the information indicating such an authorized user. Specifically, the authorized user information may be a user account such as the user name, password, etc. registered by the authorized user.

The avatar format indicates the format of the corresponding avatar, such as the file format and specifications of the avatar.

In the present embodiment, for example, one avatar can be shared with a third party depending on the permission of the authorized user. The avatar sharing information is the information related to sharing of the corresponding avatar.

The avatar sharing information shown in the figure includes sharer information and sharing conditions. The sharer information is the information about the sharer who has been permitted to share the corresponding avatar with the authorized user. The sharer information may be, for example, the user account of the sharer. The sharing conditions are the conditions under which the corresponding avatar can be shared with the sharer. The sharing conditions may include information indicating, for example, the effective date, and the service provisioning system 310 as specified in which the sharer can use the avatar.

The behavioral history information is the information indicating the history of behavior (action) of the corresponding avatar in the digital space. The behavioral history information may be provided by the service provisioning system 310 that has provided the digital space where the corresponding avatar is present. The behavioral history information may include history of the avatar's participation in the digital space, history of the avatar's participation in events held in the digital space, history of the avatar's movement in the digital space, history of the contents such as of games, transactions, etc. conducted by the avatar in the digital space, history of the contents of the statements made by the avatar in the digital space, etc.

The avatar management device 200 shown in the figure may be constituted of one device, or may be constituted of multiple devices which are communicatively connected on a network and assigned with respective predetermined functions to achieve the functions by performing collaborative processing.

The authentication object information storage 232 stores authentication object information.

Fig. 8 is a diagram illustrating an example of authentication object information corresponding to one authentication object, stored in the authentication object information storage 232.

The authentication object information shown in the figure includes authentication object data and a metafile. The authentication object data is the object data of the authentication object used for displaying (rendering) the authentication object in the metaverse.

The metafile is the file including metadata associated with the corresponding authentication object. The metafile shown in the figure includes metadata such as an authentication object ID, avatar ID, addition control information, and a certifiable item. It should be noted that the dynamic change control information corresponds to a fourth embodiment described later, and therefore the explanation is omitted in this example.

The authentication object ID is an identifier that unambiguously indicates the corresponding authentication object.

The avatar ID metadata indicates the ID of the avatar to which the corresponding authentication object is added. If the corresponding authentication object is added to multiple avatars, the avatar ID metadata may indicate multiple avatar IDs.

The addition control information is the information that specifies a mode of adding the corresponding authentication object to the avatar.

The certifiable item indicates an item to be certified by the corresponding authentication object. There may be an authentication object that certifies the corresponding avatar as not being impersonated or used fraudulently, but being under the control of the legitimate end-user (genuine avatar), or there may be an authentication object that certifies the qualifications or authority held by the avatar, or there may be authentication objects that certify other items. In this way, when there are multiple items to be certified by an authentication object, the metadata of certifiable items indicates the items to be certified by the corresponding authentication object.

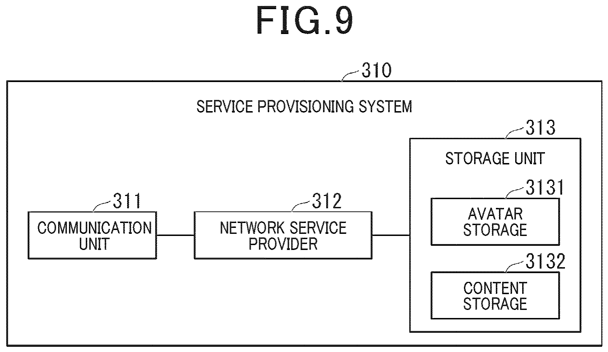

Referring to Fig. 9, a configuration example of the service provisioning system 310 will be described. The service provisioning system 310 shown in the figure includes a communication unit 311, a network service provider 312, and a storage unit 313. The service provisioning system 310 may have a hardware configuration, similarly to the configuration shown in Fig. 4, for example, including a communication device, ROM, RAM, storage, and CPU.

The communication unit 311 communicates with the avatar management device 200 or the end-user terminal 400 via a network.

The network service provider 312 performs processing for providing network services to the end-user terminal 400 via the communication unit 311. The network service provider 312 uses avatars stored in an avatar storage 3131 to provide network services.

The storage unit 313 stores various types of information handled by the service provisioning system 310. The storage unit 313 includes the avatar storage 3131 and a content storage 3132.

The avatar storage 3131 stores avatar information related to the avatar received from the avatar management device 200 for use in the network service. The avatar information stored by the avatar storage 3131 for one avatar may include the avatar information (object data, element group data, metafile, etc.) of one avatar received from the avatar management device 200.

The content storage unit 3132 stores data of contents provided as network services by the service provisioning system 310 to end-users. The contents, the formats thereof, etc. stored in the content storage 3132 are not particularly limited. Examples of the contents may include websites, videos, and web applications. The web applications may enable two-way communication between the end-user and the avatar using text or voice, for example.

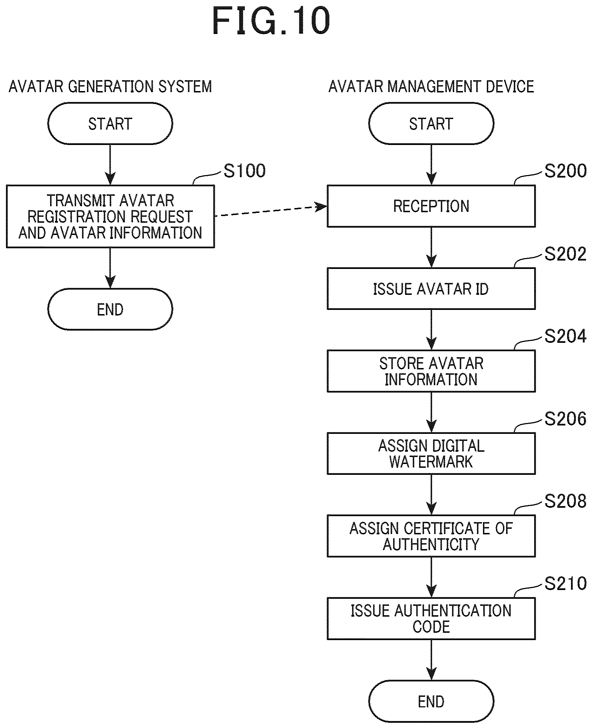

Referring to the flowchart shown in Fig. 10, an example of a processing procedure performed by the avatar generation system 100 and the avatar management device 200 in relation to avatar registration will be described.

First, an example of a processing procedure performed by the avatar generation system 100 will be described.

Step S100: In the avatar generation system 100, the integration system 120 transmits a registration request for a generated avatar to the avatar management device 200. The avatar generation system 100 transmits avatar information (object data, element group data, and metadata) corresponding to the generated avatar, together with the avatar registration request. The metadata in the avatar information transmitted by the integration system 120 corresponds to, for example, the source information and the creator information of the metafile shown in Fig. 7.

Next, an example of a processing procedure performed by the avatar management device 200 will be described.

Step S200: In the avatar management device 200, the avatar registration section 221 receives the avatar registration request and the avatar information transmitted from the integration system 120 in step S100.

Step S202: The avatar registration section 221 issues an avatar ID which is associated with the avatar that the avatar information received in step S 100 corresponds to.

Step S204: The avatar registration section 221 stores the avatar information received in step S100 in the avatar information storage 231. In this case, the avatar registration section 221 generates a metafile which includes the metadata included in the received avatar information and the avatar ID issued in step S202.

The avatar registration section 221 associates the object data and the element group data included in the received avatar information with the metafile generated as mentioned above, by the avatar ID issued in step S202. After that, the avatar registration section 221 stores the object data, element group data, metafile associated with each other by the avatar ID in the object data storage 2311, element group data storage 2312, and metafile storage 2313, respectively, of the avatar information storage 231.

Such storage of the avatar information in the avatar information storage 231 in step S204 means that the avatar corresponding to the stored avatar information has been registered. However, at the stage of storing the avatar information in step S204, authenticity certification information is yet to be assigned to the corresponding avatar. Therefore, the first authenticity certification information assignment section 222 of the avatar management device 200 assigns a watermark (example of the authenticity certification information) and a digital certificate of authenticity (example of the authenticity certification information), as authenticity certification information, related to the avatar registered in step S204, in the processing of the following steps S206 and S208.

Step S206: The first authenticity certification information assignment section 222 assigns the digital watermark to the target avatar. Therefore, for example, the first authenticity certification information assignment section 222 is configured to assign information unique to the target avatar, similarly to the avatar ID, for example, in the form of a digital watermark to the object data of the target avatar. The digital watermark assigned to the object data of the avatar is preferably of an imperceptible type, for example, but may be of a perceptible type.

Step S208: The first authenticity certification information assignment section 222 assigns a digital certificate of authenticity to the target avatar. In this case, the first authenticity certification information assignment section 222 may be configured to assign a certificate of authenticity, which certifies the creator of the target avatar, the place of storage (URL) of the target avatar, the service provisioning system 310 using the target avatar, etc., to the target avatar.

The certificate of authenticity may be issued, for example, by the first authenticity certification information assignment section 222 executing a predetermined transaction with the issuer of certificates of authenticity in the network, so that the issuer can issue a certificate of authenticity for the target avatar. Such a certificate of authenticity may be, for example, associated with the avatar ID of the target avatar (example of information unique to the registered avatar) and managed on the network.

As an example, the certificate of authenticity that the first authenticity certification information assignment section 222 assigns to the avatar may be a non-fungible token (NFT) managed by a blockchain. In this case, the first authenticity certification information assignment section 222 may be configured to use an external NFT platform, for example, to assign a certificate of authenticity to the avatar. The first authenticity certification information assignment section 222 may be configured to assign a certificate of authenticity to the avatar, which has been generated using quantum-resistant cryptography or a quantum-resistant blockchain.

The certificate of authenticity to be assigned to the avatar may be a soul bound token (SBT) that functions as a non-transferable NFT. Alternatively, the certificate of authenticity to be assigned to the avatar may be verifiable credentials (VC) issued by an issuer (issuing authority). Similarly to an SBT, a VC is non-transferable certification information.

Step S210: The first authenticity certification information assignment section 222 issues an avatar-compatible authentication code unique to the registered avatar this time. The avatar-compatible authentication code is provided to the service provisioning system 310 that provides the network service using the target avatar, together with the avatar data of the target avatar. As will be described later, the avatar-compatible authentication code is used for determining authenticity of an avatar in response to an end-user's request.

Since the avatar-compatible authentication code is unambiguously associated with the target avatar, the avatar ID issued in step S202, for example, may be used as the code.

However, for example, if security is to be increased for identification of the avatar, or for identification of the registered information which may contain the user's personal information, a code generated without relying on the avatar ID is preferably used as the avatar-compatible authentication code.

The first authenticity certification information assignment section 222 adds the issued avatar-compatible authentication code to the metafile as one item of metadata, which has been stored in the metafile storage 2313 being associated with the target avatar.

It should be noted that the registered avatar may be stored in the avatar information storage 231 in step S204, after assignment of authenticity certification information to the registered avatar and issuance of an avatar-compatible authentication code associated with the registered avatar in steps S206, S208 and S210.

Machine learning processing may be used in the processes from generation of an avatar by the avatar generation system 100 to registration of the avatar by the avatar management device 200. As an example of the machine learning processing, in response to inputting emotions into an avatar when generating the avatar, a learned model may apply components associated with the inputted emotions to the avatar. In this way, with the components combined in response to the input of "generate a happy avatar", for example, an avatar expressing happiness through facial expressions and body movements can be generated. Such a learned model may be designed, for example, by inputting a dataset of emotions and components to be assigned to an avatar as learning data into a learning unit and having the learning unit learned the data.

Also, as an example of the machine learning processing, when registering components, a tag of a category that should be associated with the components to be registered may be automatically generated or assigned, based on automatically recognized components of facial expressions and voice, or other components. Thus, for example, if the facial expression components to be registered express a smiling face, a tag of "happiness" may be automatically assigned. In this way, by assigning tags to components, users involved in avatar generation can easily search for components. Such a learned model may be designed, for example, by inputting a dataset of facial and voice components and tags into a learning unit and having the learning unit learned the data. In this case, machine learning processing may be realized using quantum operation.

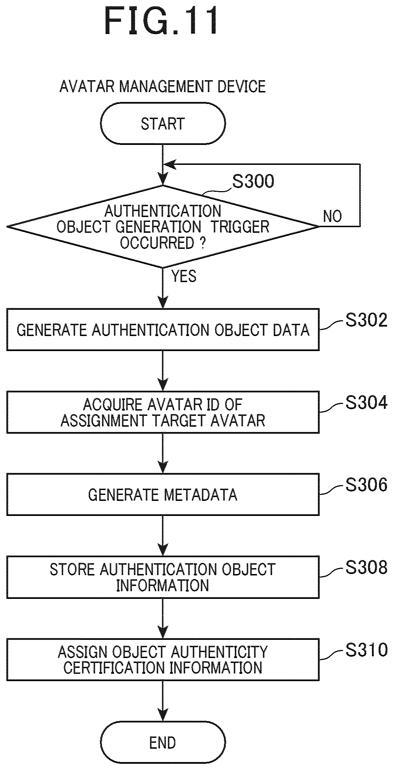

Referring now to the flowchart shown in Fig. 11, an example of a processing procedure performed by the avatar management device 200 in relation to assignment of authentication object information to an avatar will be described. The processing shown in the figure is performed, for example, when assigning an authentication object (legitimate avatar authentication object) to the avatar in question to prove the avatar as being authentic in response to registration of the avatar.

Step S300: In the avatar management device 200, the authentication object generation section 224 waits for an authentication object generation trigger to occur. The authentication object generation trigger may be generated at a predetermined timing in response, for example, to registration of the avatar by the avatar registration section 221.

Step S302: In response to obtaining an authentication object generation trigger, the authentication object generation section 224 generates authentication object data. The authentication object generation section 224 may generate, as authentication object data, object data that is drawn as represented by a predetermined 3D shape in the metaverse, for example.

Step S304: The authentication object generation section 224 (or the second authenticity certification information assignment section 225) acquires an avatar ID of the avatar to which the authentication object is to be assigned. In this case, the authentication object generation section 224 may acquire the avatar ID from the avatar information related to the avatar subject to assignment stored as metadata, among the avatar information stored in the avatar information storage 231.

Step S306: The authentication object generation section 224 generates metadata associated with the authentication object data generated in step S302. As shown in Fig. 8, the authentication object generation section 224 generates, in step S306, metadata such as an authentication object ID, an avatar ID, and a certifiable item. The avatar ID as metadata may be acquired in step S304.

Step S308: The authentication object generation section 224 generates authentication object information including the authentication object data generated in step S302 and the metadata generated in step S306. The authentication object generation section 224 stores the generated authentication object information in the authentication object information storage 232.

Step S310: The second authenticity certification information assignment section 225 assigns object authenticity certification information to the authentication object to which the authentication object information stored in the authentication object information storage 232 in step S308 corresponds.

In step S310, the second authenticity certification information assignment section 225 may assign a digital watermark to the target authentication object data as assignment of object authenticity certification information. Alternatively, the second authenticity certification information assignment section 225 may assign an NFT, SBT, etc. managed in a blockchain in association with the authentication object as assignment of object authenticity certification information thereto. Alternatively, the second authenticity certification information assignment section 225 may assign VC, etc. issued by an issuer (issuing authority) as the object authenticity certification information, in association with the authentication object. Alternatively, the second authenticity certification information assignment section 225 may assign an obfuscated program as the object authenticity certification information, in association with the authentication object.

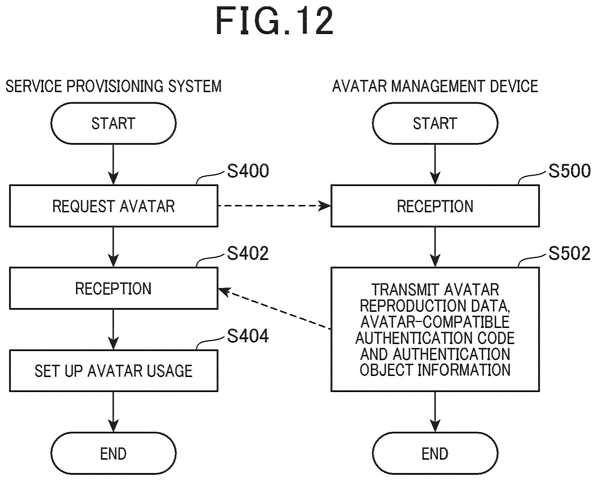

Referring to the flowchart shown in Fig. 12, an example of a processing procedure performed by the service provisioning system 310 and the avatar management device 200 in relation to avatar transfer will be described.

First, an example of a processing procedure performed by the service provisioning system 310 will be described.

Step S400: In the service provisioning system 310, the network service provider 312 transmits an avatar request to the avatar management device 200 at a predetermined timing of acquiring avatar data for use in the network service. In the avatar request, an avatar to be used by the service provisioning system 310 in the network service is specified from among the avatars registered in the avatar management device 200 and the avatar information for the specified avatar is requested.

Step S402: In response to the avatar request transmitted in step S400, the avatar management device 200 transmits avatar reproduction data, an avatar-compatible authentication code, and authentication object information corresponding to the avatar specified in the avatar request. The avatar reproduction data corresponds to information that includes object data and element group data in the avatar information.

The network service provider 312 receives the avatar reproduction data, the avatar-compatible authentication code, and the authentication object information transmitted from the avatar management device 200 as described above. In this way, the avatar information is transmitted from the avatar management device 200 to the service provisioning system 310.

Step S404: The network service provider 312 sets up avatar usage so that the avatar received in step S402 can be used in the network service.

As the processing of avatar usage setup, the network service provider 312 associates the avatar reproduction data and the avatar-compatible authentication code received in step S402 with each other and stores them in the avatar storage 3131. The network service provider 312 creates, for example, a content that is a metaverse with the avatar present therein, using the avatar reproduction data stored in the avatar storage 3131. The created content may be stored in the content storage 3132. The network service provider 312 utilizes the authentication object information received in step S402 to add an authentication object to the avatar present in the metaverse.

Next, an example of a processing procedure performed by the avatar management device 200 will be described.

Step S500: In the avatar management device 200, the avatar provision control section 227 receives the avatar request transmitted in step S400 from the service provisioning system 310.

Step S502: In response to reception of an avatar request, the avatar provision control section 227 acquires avatar reproduction data (object data and element group data) and an avatar-compatible authentication code of the avatar specified in the received avatar request from the avatar information storage 231. Also, the avatar provision control section 227 acquires authentication object information associated with the avatar ID of the specified avatar from the authentication object information storage 232.

The avatar provision control section 227 transmits (uploads) the acquired avatar reproduction data, the avatar-compatible authentication code, and the authentication object data to the service provisioning system 310 that is the transmitter of the avatar request.

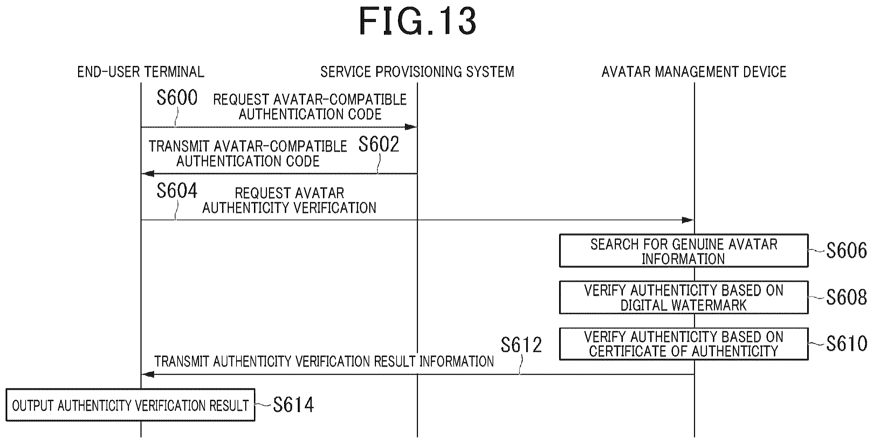

Referring to the sequence diagram shown in Fig. 13, an example of a processing procedure will be described, which is performed by the end-user terminal 400, the service provisioning system 310, and the avatar management device 200 in relation to avatar authenticity verification.

Step S600: An end-user provided with a given network service via the end-user terminal 400 suspects that the avatar used in the network service may not be authentic.

Examples of inauthentic avatars include avatars that have been tampered with by replacing the facial and other avatar elements with counterfeit elements that are different from the original, and avatars that have been copied without permission from the creator or other persons who hold given rights to the avatar.

The end-user decides to check the authenticity (request authenticity verification) of the avatar used in the network service in question. In this case, the user uses the end-user terminal 400 to cause the service provisioning system 310, which provides the network service that uses the avatar for which authenticity is to be verified, to transmit an avatar-compatible authentication code request.

The avatar-compatible authentication code request includes information that can identify the specified avatar that is the target of authenticity verification. Examples of the information that can identify the avatar may include information specifying the content of the network service in which the avatar for which authenticity is to be verified is used, and the name (avatar name) assigned to the avatar for which authenticity is to be verified.

Step S602: The network service provider 312 of the service provisioning system 310 receives the avatar-compatible authentication code request transmitted in step S600. The network service provider 312 acquires, from the avatar storage 3131, the avatar-compatible authentication code associated with the avatar used in the content of the network service which has been specified by the avatar-compatible authentication code request as received.

The network service provider 312 transmits the acquired avatar-compatible authentication code to the end-user terminal 400 that is the transmitter of the avatar-compatible authentication code request.

Step S604: The end-user terminal 400 receives the avatar-compatible authentication code transmitted from the service provisioning system 310 in step S602. Although not shown in the figure, the end-user terminal 400 may notify, e.g., by displaying, reception of the avatar-compatible authentication code in response to the transmission of the avatar-compatible authentication code request.

Receiving the avatar-compatible authentication code, the end-user terminal 400 transmits an authenticity verification request to the avatar management device 200. The authenticity verification request may include information that can identify the network service (content) in which the avatar for which authenticity is to be verified is used (network service identification information) and the avatar-compatible authentication code received in step S602.

The first authenticity verification section 223 of the avatar management device 200 receives the avatar authenticity verification request transmitted in step S604. In response to reception of the avatar authenticity verification request, the first authenticity verification section 223 performs processing of an authenticity verification for the avatar for which authenticity is to be verified in the following steps S606 to S610.

Step S606: The first authenticity verification section 223 searches through the avatar information stored in the avatar information storage 231 to find the avatar registered as genuine (genuine avatar) for the avatar to be verified. Therefore, the first authenticity verification section 223 searches through the avatar information stored in the avatar information storage 231 to find the avatar information whose metafile includes the avatar-compatible authentication code contained in the avatar authenticity verification request received.

If the avatar information related to the avatar to be verified has not been found as a result of the search in step S606, it means that the avatar associated with the avatar-compatible authentication code contained in the received avatar authenticity verification request has not been registered in the avatar management device 200. In other words, in this case, it means that the avatar-compatible authentication code itself contained in the received avatar authenticity verification request is not authentic. In this case, the first authenticity verification section 223 can determine that the avatar to be verified is not authentic based on the fact that the avatar-compatible authentication code is not authentic. In this case, since the first authenticity verification section 223 cannot acquire the avatar information related to the avatar to be verified, the processing in the following steps S608 and S610 may be skipped.

Step S608: If the avatar information related to the avatar to be verified has been found as a result of the search in step S606, the first authenticity verification section 223 performs processing for an authenticity verification based on the digital watermark.

In this case, the first authenticity verification section 223 performs an access to the network service that has been identified based on the network service identification information contained in the received avatar authenticity verification request, and acquires an image of the object of the avatar (i.e., the avatar to be verified) used in the network service accessed.

The first authenticity verification section 223 extracts the digital watermark from the acquired image of the object of the avatar to be verified. The first authenticity verification section 223 also extracts the digital watermark from the object data of the genuine avatar. The first authenticity verification section 223 compares the digital watermark extracted from the avatar to be verified with the digital watermark extracted from the genuine avatar to determine whether the two match.

Step S610: The first authenticity verification section 223 performs authenticity verification as follows for the avatar to be verified based on the authenticity certification information.

The first authenticity verification section 223 acquires a certificate of authenticity associated with the avatar ID of the avatar information related to the genuine avatar searched in step S606, from an issuer of certificates of authenticity on the network and refers to the contents of the acquired certificate of authenticity.

The certificate of authenticity may include description, for example, for information indicating the place where the genuine avatar is stored or the network service in which the genuine avatar is used. In this case, the first authenticity verification section 223 compares the information for the network service in which the avatar to be verified is used, the place where the genuine avatar is stored, etc. (comparison information) with the description of the certificate of authenticity to find whether the two match.

Through the processing of steps S606 to S610, the first authenticity verification section 223 can obtain the result of authenticity verification as follows for the avatar to be verified.

If avatar information corresponding to the genuine avatar has not been found as a result of the search in step S606, the first authenticity verification section 223 can obtain, as described above, the result of authenticity verification indicating the avatar to be verified as not being authentic for the reason that the avatar-compatible authentication code itself associated with the avatar to be verified is not authentic.

The nature of the fraud in the case of the avatar-compatible authentication code being fake may be, for example, that the avatar to be verified has not been created by the authorized creator and that therefore could not be associated with the genuine avatar-compatible authentication code.

If the digital watermark of the avatar to be verified is determined not to match the digital watermark of the genuine avatar in step S608, the first authenticity verification section 223 can obtain the result of authenticity verification indicating the avatar to be verified as being inauthentic for the reason that the two digital watermarks do not match.

Thus, the fraudulent behavior in the case of the digital watermarks not matching may be, for example, the case where the genuine avatar was tampered with to generate the avatar to be verified by replacing or partially rewriting the facial or body elements or other elements.

If the contents of the comparison information do not match the contents of the certificate of authenticity in step S610, the first authenticity verification section 223 can obtain the result of authenticity verification indicating the avatar to be verified as being inauthentic for the reason that no certificate of authenticity has been assigned.

The fraudulent behavior in this case may be that the creator of the avatar to be verified is not the authorized person, or that use of the corresponding genuine avatar is not permitted in the network service in which the avatar to be verified is used.

On the other hand, if the digital watermark of the avatar to be verified matches the digital watermark of the genuine avatar in step S608 and if the contents of the comparison information match the contents of the certificate of authenticity in step S610, the first authenticity verification section 223 can obtain the result of authenticity verification verifying the avatar to be verified as being a genuine avatar.

Step S612: The first authenticity verification section 223 transmits information indicating the result of authenticity verification obtained in the processing of steps S606 to S610 (authenticity verification result information) to the end-user terminal 400 that is the transmitter of the avatar authenticity verification request.

The authenticity verification result information may include the avatar ID of the avatar to be verified, information on the creator, information on the source person, etc. If the avatar is verified as being inauthentic, the authenticity verification result information may include information indicating the reason for determining the avatar as being inauthentic.

Step S614: The end-user terminal 400 receives the authenticity verification result information transmitted from the avatar management device 200 in step S612. The end-user terminal 400 outputs the received authenticity verification result information in a predetermined manner.

For example, the end-user terminal 400 may display the authenticity verification result information by text, etc. In this case, the verification result related to authenticity may be displayed by text strings, etc., including information indicating whether the avatar to be verified is genuine or not, the reason in the case of the avatar being inauthentic, the ID of the avatar to be verified, information on the creator, etc.

The end-user terminal 400 may be configured to perform the processing of Fig. 13, by a chatbot application, for example.

Specifically, for example, the end-user may input a message such as "I would like to check the authenticity of the avatar named XXX in the network service" to a chatbot application running on the end-user terminal 400. In response to the input of such text, the end-user terminal 400 may transmit an avatar-compatible authentication code request in step S600.

In response to reception of an avatar-compatible authentication code in step S602, the chatbot application may send a message saying "The avatar-compatible authentication code is [XXXXX]. Would you like to check the authenticity with this avatar-compatible authentication code?" The end-user may then input a message of command to verify authenticity to the chatbot application, such as "Verify authenticity." In response to the input of such a message of command, the end-user terminal 400 may transmit an avatar authenticity verification request to the avatar management device 200 in step S604.

In response to the transmission of the avatar authenticity verification request, the avatar management device 200 may perform the processing of steps S606 to S610 to verify the authenticity of the avatar to be verified, and may transmit the authenticity verification result to the end-user terminal 400 in step S612.

The chatbot application may display the message of the authenticity verification result information received. For example, as a message for authenticity verification result information verifying the avatar as being authentic, the chatbot application may display a message that reads "The avatar for which you requested verification has been determined to be authentic. The avatar ID for this avatar is [00000A], the creator is "YYYYY", and the source person is "ZZZZZ."

Instead of the chatbot application, authenticity verification may be ensured to be performed by the end-user terminal 400 in the following manner.

In the metaverse space where the avatar is present (hereinafter simply referred to as metaverse), identity (authenticity) may be verified at the entrance to a specific place. Specifically, an entrance to a specific place may be provided in the metaverse, and a reception avatar at the entrance may ask the avatar attempting to pass through the entrance to show identification, to check authenticity. In response to the request to show identification, the avatar for which authenticity is to be verified may disclose identification, in response to which, the avatar management device 200 may perform the authenticity verification processing according to the processing of steps S606 to S610, for example. In this case, if a verification result as being authentic is obtained, the reception avatar in the metaverse may permit the avatar for which authenticity has been verified to enter via the entrance.

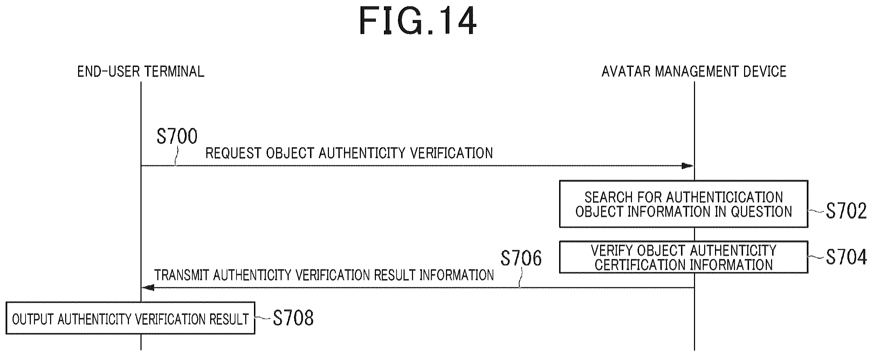

Referring to the sequence diagram shown in Fig. 14, an example of a processing procedure will be described, which is performed by the end-user terminal 400, the service provisioning system 310, and the avatar management device 200, in relation to authenticity verification of the authentication object to be added to the avatar.

Step S700: An end-user provided with a given network service via the end-user terminal 400 suspects that the authentication object added to an avatar used in the network service may not be authentic. The end-user then decides to check authenticity (request authenticity verification) of the authentication object used in the network service in question. In this case, the end-user uses the end-user terminal 400 to transmit an object authenticity verification request to the avatar management device 200 from the end-user terminal 400. The object authenticity verification request may include the authentication object ID indicating the authentication object of which authenticity is to be verified.

The second authenticity verification section 226 of the avatar management device 200 receives the object authenticity verification request transmitted in step S700. In response to reception of the object authenticity verification request, the second authenticity verification section 226 performs processing of an authenticity verification for the authentication object of which authenticity is to be verified in the following steps S702 to S708.

Step S702: The second authenticity verification section 226 searches through the authentication object information in the storage unit 232 to find authentication object information corresponding to the authentication object of which authenticity is to be verified. In this case, the second authenticity verification section 226 searches through the authentication object information in the storage unit 232 to find authentication object information in which the authentication object ID contained in the received object authenticity verification request is stored as metadata.

If the authentication object information related to the object to be verified has not been found as a result of the search in step S702, it means that the authentication object information associated with the authentication object ID contained in the object authenticity verification request as received is not registered in the avatar management device 200. In other words, in this case, the authentication object ID itself contained in the received object authenticity verification request is inauthentic. In this case, the second authenticity verification section 226 can determine the authentication object to be verified as being inauthentic. In this case, since the second authenticity verification section 226 cannot acquire the authentication object information related to the authentication object to be verified, the processing of the following step S704 may be skipped.

Step S704: If the authentication object information related to the authentication object to be verified is found as a result of the search in step S702, the second authenticity verification section 226 performs processing of an authenticity verification for the authentication object. As a specific example, if the object authenticity certification information is in the form of a digital watermark, the second authenticity verification section 226 performs an access to the network service that has been identified based on the network service identification information contained in the received object authenticity verification request, and acquires an image of the target authentication object used in the network service accessed.

The second authenticity verification section 226 extracts the digital watermark from the acquired image of the authentication object. The second authenticity verification section 226 also extracts the digital watermark from the authentication object data added to the corresponding genuine authentication object. The second authenticity verification section 226 compares the digital watermark extracted from the authentication object to be verified with the digital watermark extracted from the genuine authentication object to determine whether the two match. The second authenticity verification section 226 determines the authentication object to be verified as being authentic if the two match, or determines it as being not authentic if the two do not match.

Step S706: The second authenticity verification section 226 transmits information indicating the result of authenticity verification obtained in step S704 (authenticity verification result information) to the end-user terminal 400 that is the transmitter of the object authenticity verification request.

Step S708: The end-user terminal 400 receives the authenticity verification result information transmitted from the avatar management device 200 in step S706. The end-user terminal 400 outputs the received authenticity verification result information in a predetermined manner.

The end-user terminal 400 may be configured to perform the processing of Fig. 14 by a chatbot application, for example, similarly to the avatar authenticity verification.

The authentication object of the present embodiment may include qualifications or authority held by the avatar (qualification authentication object), other than a genuine avatar authentication object The qualification authentication object is preferably added after the target avatar has been verified as having a legitimate qualification and authority.

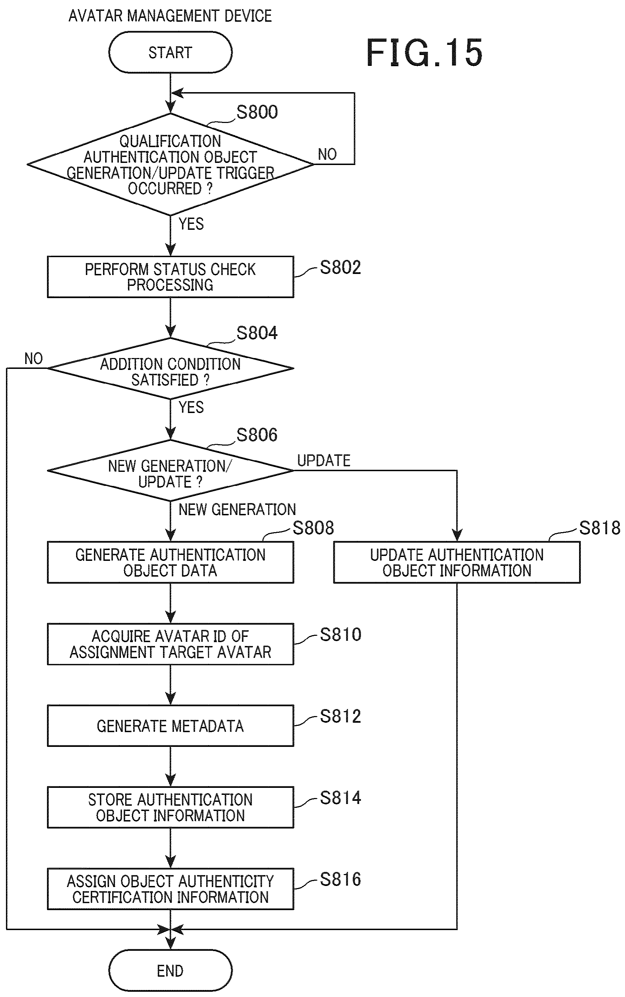

Referring now to the flowchart shown in Fig. 15, an example of a processing procedure performed by the avatar management device 200 in relation to addition of a qualification authentication object will be described.

Step S800: In the avatar management device 200, the authentication object generation section 224 waits for a qualification authentication object generation/update trigger to occur for a given target avatar. The qualification authentication object generation/update trigger instructs generation of a new qualification authentication object or an update of the already added qualification authentication object, for the target avatar.

The qualification authentication object generation/update trigger may be activated, for example, in response to a request from an end-user (including not only individual users but also IP holder companies, etc.) corresponding to the target avatar. The qualification authentication object generation/update trigger may be activated in response to the target avatar entering/participating in a predetermined metaverse or an event in the metaverse. The qualification authentication object generation/update trigger may be activated in response to the target avatar moving to a designated location or performing registration to enter/participate in a metaverse or an event in the metaverse where addition of the corresponding qualification authentication object is a condition for entry/participation.

Step S802: If a qualification authentication object generation/update trigger is activated, the authentication object generation section 224 performs status check processing for checking the current status (avatar status) of the target avatar.

As the status check processing, the authentication object generation section 224 refers to behavioral history information (Fig. 7) stored in the avatar information related to the target avatar.

Step S804: The authentication object generation section 224 determines whether the avatar status checked in step S802 satisfies the addition condition for the qualification authentication object.

As a specific example, a description will be given taking an example in which the qualification authentication object guarantees the rank of the fan of a specified artist. In this example, the addition condition is that the fan has attended a live event of the corresponding artist a predetermined number of times or more. In this case, the authentication object generation section 224 checks, in step S802, the number of times the target avatar attended a live event of the corresponding artist. If the number of times of attending a live event is greater than or equal to a predetermined number, the authentication object generation section 224 determines that the addition condition is satisfied.

Step S806: If the addition condition is determined to be satisfied in step S804, the authentication object generation section 224 determines whether the manner of adding a qualification authentication object corresponding to the current addition condition is new generation or an update.

If the qualification authentication object corresponding to the current addition condition has not yet been added, the authentication object generation section 224 determines the manner of addition to be new generation.

On the other hand, if a qualification authentication object corresponding to a lower addition condition than the current addition condition has been added, although the certifiable item matches, the authentication object generation section 224 determines the manner of addition as being an update. As a specific example, let us discuss the case where the certifiable item of the qualification authentication object matches as a guarantee of the rank of the fan of the given artist. In this case, the addition condition satisfied currently corresponds to the qualification authentication object that guarantees an A-rank as a rank of the fan. However, if the qualification authentication currently added to the avatar guarantees B-rank lower than the A-rank, a determination as being an update is made.

Step S808: If a determination as being new generation is made in step S806, the authentication object generation section 224 newly generates qualification authentication object data corresponding to the current addition condition.

The processing of steps S810 to S816 may be similar to steps S304 to S310 of Fig. 11.

Step S818: If the manner of adding a qualification authentication object corresponding to the current addition condition is determined to be an update in step S806, the authentication object generation section 224 updates the qualification authentication object information so as to correspond to the current addition condition.

Specifically, there may be a case where the form of a qualification authentication object depends on the addition condition under a matching certifiable item. In this case, the authentication object generation section 224 updates the qualification authentication object data contained in the authentication object information in question stored in the authentication object information storage 232 to a qualification authentication object with a form corresponding to the current addition condition.

The authentication object generation section 224 may update part of the metadata contained in the authentication object information in question, which is required to be updated in response to the current addition condition being satisfied. For example, in the case of a qualification authentication object that guarantees the rank of the fan of an artist, the metadata indicating the rank of the fan of the artist may be additionally stored in association with the metadata of the certifiable items. In this case, the authentication object generation section 224 may update the metadata indicating the rank of the fan of the artist so as to indicate the rank corresponding to the current addition condition.

### <Second Embodiment>

Next, a second embodiment will be described. The avatar of the present embodiment is a 3D realistic avatar. For example, an avatar may be created as a real figurine using a 3D printer or the like, and sold or distributed in the real world. In this case, an authentication object may be added to the avatar as a figure.

Similarly, the authentication object added to the avatar may also be created as a real figurine and sold or distributed in the real world.

As described above, when creating and selling figurines of avatars or authentication objects in the real world, it is required that creation, sale, etc. be limited to those who have been given legitimate authority, in accordance with copyright, sales rights, etc.

For this reason, when providing an avatar information/authentication object to be used for printing to a person with legitimate authority to create a figure, the avatar management device 200 of the present embodiment may add 3D-compatible watermark data to object data of the avatar/authentication object, for example.

The 3D-compatible watermark data, which is not visible in the metaverse, may added to object data so that a mark such as a background pattern or a colored pattern appears at a predetermined position on the figure created by a 3D printer. The position where the mark appears is preferably an inconspicuous position, such as the sole of the foot.

As a result, for example, if a figure is created with a 3D printer using avatar information/authentication object information obtained through unauthorized channels, the source avatar information will not include 3D-compatible watermark data. In this case, no mark appears on the figure created.

Alternatively, conversely to the above, the 3D-compatible watermark data may be created such that a marker appears at a predetermined position on the figure if the figure is created with a 3D printer using avatar information/authentication object information obtained through unauthorized channels. The position where the mark appears in this case may be, for example, a conspicuous position such as the face.

In this case, for example, whether to add 3D-compatible watermark data may be specified in the metafile of the avatar information/authentication object information for each avatar. Also, an authorized 3D printer capable of creating (printing) a figure of the corresponding avatar/authentication object may be registered in the metafile. Then, the authorized 3D printer can access the avatar management device 200 and obtain authentication, thereby obtaining avatar information/authentication object information through authorized channels from which the 3D-compatible watermark data has been removed by the avatar management device 200, and can create a figure. No mark appears on the figure created in this way.

On the other hand, an unauthorized 3D printer cannot access the avatar management device 200 to obtain authentication. In this case, the unauthorized 3D printer creates a figure using the avatar information/authentication object information obtained through unauthorized channels. Since the 3D-compatible watermark data has not been removed from the avatar information/authentication object information obtained fraudulently, the mark will appear on the created figure, proving the figure as not being authentic.

In this way, in the present embodiment, authenticity of a figure that is present in the real world can be determined based on whether a predetermined mark appears or not. Thus, figures created based on fraudulent avatar information/authentication object information can be prevented from being distributed in the real world.

In the present embodiment, the person who has legitimate authority of creating figures may be defined by avatar common information (Fig. 7) in the avatar information metadata. In this case, the common conditions in the corresponding avatar common information may indicate that creation of the avatar figure is permitted.

### <Third Embodiment>

Next, a third embodiment will be described. In the first embodiment described above, the avatar management device 200 is configured to manage an authentication object in an integrated manner to add the authentication object to the avatar in the metaverse provided by the service provisioning system 310.

In this regard, in the present embodiment, the service provisioning system 310 may create an authentication object and manage the created authentication object.

As an example, in the case where the service provisioning system 310 is configured to provide a network service for guiding a tour in the metaverse, the service provisioning system 310 may manage an authentication object that guarantees a role of a tour guide. The service provisioning system 310 may add an authentication object that guarantees an avatar to be a tour guide, and then may allow the avatar to guide a tour.

### <Fourth Embodiment>

The authentication object added to an avatar may be ensured to change in a digital space.

As one mode of a dynamic change, motion may be imparted to an authentication object. There are various modes of motion for an authentication object including, for example, a mode in which the authentication object swings and rotates at a specified position, and a mode in which the authentication object moves along a predetermined movement route or a random route in a given space of the digital space.

As a mode of dynamic change of an authentication object, the design of the authentication object may be ensured to change. As a mode of design change, the shape or size of the authentication object may change, the color of the authentication object may change, or a predetermined visual effect may be produced in the authentication object.

As a mode of dynamic change of an authentication object, movement may be added to the authentication object itself in the digital space. As a mode of movement of the authentication object itself, for example, the authentication object may be designed to swing or rotate with a predetermined or random pattern, or move in the digital space in a predetermined or random pattern.

Two or more elements of such dynamic change of an authentication object may be appropriately combined.

As dynamic change of an authentication object, for example, the authentication object may be designed to change continuously over time in the state of being present in the digital space, or may be designed to change temporarily or continuously over time for a predetermined period of time in response to the occurrence of a given trigger.

Alternatively, the authentication object may be designed to remain static normally in the digital space, and to change temporarily or continuously over time for a predetermined period of time in response to the occurrence of a given trigger.

Alternatively, the authentication object may be designed to remain static in a predetermined mode (e.g., color) and, in response to the occurrence of a trigger, to change to a different mode (color), remaining static thereafter in the changed mode.

Such a dynamic change of the authentication object, which may be performed as a function of making the authentication object more interesting, can be used for detecting fraud involving the avatar.

An example of fraud detection involving an avatar, using a dynamic change of an authentication object will be described below.

For example, when a lecture is given to students using avatars in a digital space such as a lecture hall or web conferencing system in the metaverse, there may be restrictions on the students who are authorized to attend the lecture, such as only those who have registered to take the lecture at particular universities. Therefore, a user, as a student taking the lecture, may obtain an authentication object indicating that the user has the authority to take the lecture (hereinafter may also be referred to as attendance authorization object), and may add the obtained attendance authorization code to the avatar corresponding to the user which is present in the digital space.

The attendance authorization object added to the avatar in this way functions as an attendance certificate that proves that the corresponding student's avatar has the authority to attend the lecture in the lecture hall.

When obtaining the authorization object, for example, the student user may operate the end-user terminal 400 to select an avatar to participate in the lecture, and may further select an attendance authorization object to be provided as an attendance certificate for the lecture to be attended this time, as an authorization object to be added to the avatar. The avatar management device 200 may add the selected attendance authorization object to the selected avatar. The avatar management device 200 may transmit the avatar, to which the attendance authorization object is added, to the service provisioning system 310 that provides the lecture. The service provisioning system 310 may allow the received avatar to be present in the digital space where the lecture will be given. The avatar present in the digital space has been provided with the attendance authorization object.

The attendance authorization object may be managed by the avatar management device 200 or the service provisioning system 310 giving the lecture, in association with the student user or the student avatar. In this case, the metafile of the authentication object information (Fig. 8) may contain control information for causing a dynamic change in the attendance authorization object (dynamic change control information). The network service provider 312 of the service provisioning system 310 may control the attendance authorization object so as to cause a dynamic change based on the dynamic change control information.

It should be noted that the dynamic change control information does not have to be fixed but may, for example, be appropriately changed by a person authorized to make a change.

In such an example, the certificate of authenticity assigned to the attendance authorization object may preferably be a non-transferable SBT, VC, etc.

The dynamic change of the attendance authorization object may be designed to correspond to each student avatar, so as to cause a common mode. The dynamic change of the attendance authorization object may be fixedly determined in advance, or may be appropriately changed, for example, by the operator of the service provisioning system 310 giving the lecture rewriting the dynamic change control information related to the authentication object information, for example.

In the digital space where the lecture is held, attendance authorization objects are displayed, which have been added corresponding to the individual avatars present as students attending the lecture. If there is any avatar not displaying an authentication object among the avatars present in the digital space, the avatar in question can be detected as an unauthorized avatar corresponding to a user who is not authorized to attend the lecture. Detection of such an inauthentic avatar may be performed by the network service provider 312 of the service provisioning system 310 presenting the lecture. Inauthentic avatars to which attendance authorization objects have not been added may be visually determined, for example, by the user corresponding to the lecturer avatar giving the lecture, or the operator of the service provisioning system 310 presenting the lecture.

In this case, one example of fraud conducted by a user is the case of adding a fake attendance authorization object to an avatar to participate in the lecture. The fake attendance authorization object may be obtained, for example, by the user creating it himself or by obtaining it from an unauthorized provider.

In such a case, for example, in the digital space where the lecture is given, the genuine attendance authorization objects provided by legitimate providers all dynamically change over time in the same way, whereas the fake attendance authorization object has a high probability of not dynamically changing in the same way as the genuine attendance authorization objects. In other words, in this case, the presence of the attendance authorization object dynamically changing differently from other attendance authorization objects can identify the inauthentic avatar corresponding to the user who is not authorized to attend the lecture. Identification of such an inauthentic avatar may also be performed by the network service provider 312 of the service provisioning system 310 presenting the lecture.

Alternatively, each attendance authorization object does not have to constantly undergo a dynamic change but may be in a static state of not constantly undergoing a dynamic change. In addition, the attendance authorization object may be capable of transitioning from a static state to a dynamic state in response to the user's operation.

In this case, for example, the lecturer giving the lecture or the operator of the service provisioning system 310 presenting the lecture may instruct the student user to operate the attendance authorization object to undergo a dynamic change at a predetermined timing such as the timing before start of the lecture. Receiving the instructions, the student user may operate the attendance authorization object that has been added to the avatar corresponding to the user to undergo a dynamic change.

In this case, the lecturer or the operator can identify the attendance authorization object dynamically changing differently from the genuine attendance authorization objects, as being a fake attendance authorization object. Consequently, the lecturer or the operator can identify the avatar of the user attempting to fraudulently attend the lecture and can remove the unauthorized user's avatar from the lecture hall. Such identification of the avatar of the user attempting to fraudulently attend the lecture and removal of the unauthorized user's avatar may be performed by the network service provider 312 of the service provisioning system 310 presenting the lecture.

For example, as described above, the avatar of the user who is not authorized to attend the lecture can be identified by conducting authenticity verification based on the authenticity certification information (certificate of authenticity, digital watermark, etc.) assigned to the avatar or the object authenticity certification information assigned to the authentication object.

However, as long as the detection is to detect fraud of the attendance authorization object imparted with the dynamic change as described above, the fraud detection can be conducted simply and reliably based on the state of the dynamic change of the attendance authorization object in the digital space.

Fraud detection for authentication objects imparted with a dynamic change can be used for various purposes other than lectures, such as the case of detecting whether spectators entering a concert venue have purchased tickets legitimately.

### <Fifth Embodiment>

As described above, the authenticity certification information (including certificate of authenticity) may be a VC or SBT. An SBT and VC, which can be managed as non-transferable items, are information that can permanently prove the authenticity and existence specific to the corresponding avatar. In the following explanation, SBT and VC are also referred to as permanent authenticity certification information when no particular distinction is made.

In the following, as a fifth embodiment, some examples (use cases) of usage of such permanent authenticity certification information such as VC and SBT will be described.

### [Use case 1]

For example, in the fourth embodiment described above, when a student user attempts to obtain an authentication object from the avatar management device 200, the authentication object generation unit 224 of the avatar management device 200 may check the presence of or authenticity of a student ID card, based on permanent authenticity certification information assigned to the avatar specified by the user as the object to which the authentication object is added. If the target avatar could be verified as having a legitimate student ID, the authentication object generation section 224 may add an authentication object to the target avatar.

### [Use case 2]

In the present example, the authentication object functions as a support authentication object certifying that the corresponding avatar (corresponding user) is a supporter of a character such as an artist acting in the digital space. For example, a support authentication object may be added to the corresponding avatar by the corresponding avatar or user registering with a support organization such as a fan club for the artist's character. Such a support authentication object may be added to the avatar by the service provisioning system 310 that provides the digital space where the corresponding character acts. In this case, the authentication object generation unit 224 of the avatar management device 200 may generate authentication object information for the support authentication object provided by the service provisioning system 310 and store it in the authentication object information storage 232.

Then, in the present example, the mode of the support authentication object added to the supporter avatar may be changed according to the contents (e.g., the character's attributes) indicated by the permanent authenticity certification information (VC or SBT) added to the avatar that is the character to be supported.

More specifically, for example, each character may be associated with an individual design, such as a different symbol color, and the support authentication object may reflect the individual design associated with the character to be supported.

Alternatively, for example, depending on the permanent authenticity certification information assigned to the avatar as a character to be supported, the activity history and amount of activity of the avatar as a character to be supported may be indicated, so that the support authentication object is provided with a design determined according to the activity history and amount of activity of the character to be supported.

In the present example, the network service provider 312 of the service provisioning system 310 may recognize the contents of the permanent authenticity certification information assigned to the character that is a target of support by an avatar existing in the digital space, and may add a feature corresponding to the recognized contents to the support authentication object of the supporter avatar.

In the present example, the mode given to the support authentication object is not limited to the design, but may be the movement of the support authentication object itself.

### [Use case 3]

For example, in response to the avatar participating in an event held in a digital space, permanent authenticity certification information (VC or SBT) may be added to the avatar as a participation certificate. In this case, permanent authenticity certification information may be added as a participation certificate in response, for example, to the conditions for participating in the event at least twice being satisfied.

After the permanent authenticity certification information is provided as a participation certificate, the number of participations indicated in the permanent authenticity certification information as a participation certificate is updated as the number of times the avatar participates in the event increases. The rank of the avatar as an event participant may be increased at each predetermined interval of the number of times of participation. In this case, the mode of the authentication object of the avatar may be changed, with the rank of the avatar indicated.

When the number of participations indicated in the permanent authenticity certification information reaches a specified value, a digital watermark may be further added to the avatar as authenticity certification information. The avatar with a digital watermark added in this way indicates that the rank of the event participant is higher than a given level.

### [Use case 4]

For example, in the digital space as a metaverse, an avatar may obtain items such as NFT art.

In the present example, in response to acquisition of such an item, an authentication object indicating that the item in question has been acquired may be added to the corresponding avatar. In this case, the network service provider 312 of the service provisioning system 310 providing the item may generate an authentication object (item authentication object) in response to acquisition of the item. The item authentication object generated in this way may be assigned with permanent authenticity certification information (VC or SBT) indicating the corresponding item.

The network service provider 312 may store authentication object information related to the generated authentication object in the avatar management device 200.

The network service provider 312 may assign a digital watermark to the item that has been acquired.

In this case, as the number of items acquired by the avatar increases, the number of authentication objects corresponding to the items added to the avatar also increases. If an avatar has acquired a large number of item-compatible authentication objects, the state in which the authentication objects for all the respective items acquired in the metaverse are present may be quite cumbersome and undesirable.

Therefore, in the present example, authentication objects up to a predetermined upper limit number selected from among the authentication objects corresponding to the respective items obtained may be associated with the avatar and be present in the metaverse. The item-compatible authentication objects may be selected, for example, by the corresponding user's operation. Alternatively, the item-compatible authentication objects may be selected by, for example, the network service provider 312 of the service provisioning system 310 that provides the digital space in which the avatar is present, so as to satisfy a predetermined condition. The predetermined condition may be, for example, that the items are included in the upper limit in order of most recent purchase, that the items are included in the upper limit in order of purchase price, or that the items are registered as favorites by the user. Registration of the items as favorites may be indicated, for example, by authenticity certification information related to the authentication objects corresponding to the items, or may be indicated by authenticity certification information assigned to the items.

Depending on the opt-in of the user corresponding to the avatar that has acquired the items, a certificate of acquisition of each item based on permanent authenticity certification information (VC or SBT) assigned to the item-compatible authentication object may be presented in the metaverse.

A program for realizing the functions of the avatar generation system 100, avatar management device 200, service provisioning system 310, end-user terminal 400, etc. may be recorded on a computer-readable recording medium, and the program recorded on this recording medium may be read into a computer system and executed to perform the processing of the avatar generation system 100, avatar management device 200, service provisioning system 310, end-user terminal 400, etc. The expression "the program recorded on this recording medium may be read into a computer system and executed" includes installing the programs on the computer system. The computer system referred to herein may include an OS and hardware components such as peripheral devices. The computer system may also include multiple computer devices that are connected thereto via a network such as the Internet, WAN or LAN, or network including communication lines such as dedicated lines, etc. The computer readable recording medium refers to a storage device such as a portable medium, e.g., a flexible disk, magneto-optical disk, ROM, CD-ROM, etc., or a hard disk incorporated in the computer system. In this way, the recording medium storing the programs may be a non-transitory recording medium such as a CD-ROM, etc. Moreover, the recording medium also includes a recording medium that is internally or externally provided and that can be accessed from the distribution server in order to distribute the programs. The program code of the programs that are stored on the recording medium of the distribution server may have a different program code format than a format that is executable by a terminal device. In other words, as long as the programs can be downloaded from the distribution server and installed in a format that is executable by a terminal device, any format stored on the distribution server may be used. A program may be divided into multiple programs and combined in the terminal device after each program is downloaded at different timings, or different distribution servers may be used for distributing the divided programs. The computer readable recording medium may also include a recording medium temporarily storing programs, such as a volatile memory (RAM) inside a server in the case of transmitting programs via a network or inside a computer system different from the client's computer system. The programs may be those which achieve part of the functions described above. The programs may be those which can achieve the functions described above in combination with the programs already recorded in the computer system, that is, a so-called differential file (differential program).

### <Additional Note>

(1) An aspect of the present embodiment is an avatar management system including an authentication object generation section that generates an authentication object that certifies predetermined matters related to an avatar that can be used in a network service provided on a network; and an object authenticity certification information assignment section that assigns object authenticity certification information that certifies authenticity of the authentication object generated by the authentication object generation section.
(2) An aspect of the present embodiment is the avatar management system according to (1), wherein the object authenticity certification information assignment section may generate object authenticity certification information related to the authentication object associated with the avatar to be registered, based on avatar-specific information associated with the avatar in question.
(3) An aspect the present embodiment is the avatar management system according to (1) or (2), wherein the authentication object generation section may generate a new authentication object or update the authentication object that has been assigned to the avatar in question, in response to the avatar in question being determined to satisfy a predetermined condition based on history related to the corresponding avatar.
(4) An aspect of the present embodiment is the avatar management system according to any one of (1) to (3), wherein the authentication object may be displayed after being added to the corresponding avatar in a predetermined manner in a digital space provided as the network service.
(5) An aspect of the present embodiment is the avatar management system according to any one of (1) to (4), wherein the authentication object that is present in the digital space provided as the network service may be displayed so as to cause a change in a predetermined manner.
(6) An aspect of the present embodiment is the avatar management system according to (5), wherein the authentication object may be displayed so as to cause a change in a predetermined manner over time.
(7) An aspect of the present embodiment is the avatar management system according to (5) or (6), wherein the authentication object may be displayed so as to cause a change in a predetermined manner in response to occurrence of a predetermined trigger.
(8) An aspect of the present embodiment is the avatar management system according to any one of (1) to (7), wherein the object authenticity certification information may be a digital watermark to be embedded in data of the corresponding authentication object.
(9) An aspect of the present embodiment is the avatar management system according to any one of (1) to (8), wherein the object authenticity certification information may be a non-fungible token (NFT) assigned in association with the corresponding authentication object.
(10) An aspect of the present embodiment is the avatar management system according to any one of (1) to (9), wherein the object authenticity certification information may be non-transferable certification information assigned in association with the corresponding authentication object.
(11) An aspect of the present embodiment is the avatar management system according to (10), wherein the non-transferrable certification information may be a soul bound token (SBT).
(12) An aspect of the present embodiment is the avatar management system according to (10) or (11), wherein the non-transferrable certification information may be verifiable credentials (VC).
(13) An aspect of the present embodiment is the avatar management system according to any one of (1) to (12), wherein the object authenticity certification information may be an obfuscated program assigned in association with the corresponding authentication object.
(14) An aspect of the present embodiment is the avatar management system according to any one of (1) to (13), wherein the object authenticity certification information may be provided with the corresponding authentication object to guarantee authenticity of qualification to be held by the avatar.
(15) An aspect of the present embodiment is an avatar management method in an avatar management system, including: an authentication object generation step in which an authentication object generation section generates an authentication object that certifies predetermined matters related to an avatar that can be used in a network service provided on a network; and an object authenticity certification information assignment step in which an object authenticity certification information assignment section assigns object authenticity certification information that certifies authenticity of the authentication object generated in the authentication object generation step.
(16) An aspect of the present embodiment is a program that causes a computer in an avatar management system to function as an authentication object generation section that generates an authentication object that certifies predetermined matters related to an avatar that can be used in a network service provided on a network; and as an object authenticity certification information assignment section that assigns object authenticity certification information that certifies authenticity of the authentication object generated by the authentication object generation section.

The present embodiment described above can be expressed as follows.

A computer-readable non-transitory storage medium storing a program for generating an authentication object that certifies predetermined matters related to an avatar that can be used in a network service provided on a network, and for assigning object authenticity certification information that certifies authenticity of the authentication object generated by the authentication object generation section.

### [Industrial Applicability]

According to the present invention, users can easily know authenticity of avatars.

### [Reference Signs List]

- 100: Avatar generation system
- 110 (110-1 to 110-6): Avatar element provisioning system
- 120: Integration system
- 200: Avatar management device
- 201: Communication unit
- 202: Control unit
- 203: Storage unit
- 221: Avatar registration section
- 222: First authenticity certification information assignment section
- 223: First authenticity verification section
- 224: Authentication object generation section
- 225: Second authenticity certification information assignment section
- 226: Second authenticity verification section
- 227: Avatar provision control section
- 231: Avatar information storage
- 300: Network service environment
- 310: Service provisioning system
- 311: Communication unit
- 312: Network service provider
- 313: Storage unit
- 400: End-user terminal
- 2311: Object data storage
- 2312: Element group data storage
- 2313: Metafile storage
- 3131: Avatar storage
- 3132: Content storage

## Claims

1. An avatar management system comprising
an authentication object generation section that generates an authentication object that certifies predetermined matters related to an avatar that can be used in a network service provided on a network; and
an object authenticity certification information assignment section that assigns object authenticity certification information that certifies authenticity of the authentication object generated by the authentication object generation section.

2. The avatar management system according to claim 1, wherein
the object authenticity certification information assignment section generates object authenticity certification information related to the authentication object associated with the avatar, based on avatar-specific information associated with the avatar.

3. The avatar management system according to claim 1 or 2, wherein
the authentication object generation section newly generates an authentication object or updates the authentication object that has been assigned to the avatar, in response to the avatar being determined to satisfy a predetermined condition based on history related to the corresponding avatar.

4. The avatar management system according to claim 1 or 2, wherein
the authentication object is displayed after being added to the corresponding avatar in a predetermined manner in a digital space provided as the network service.

5. The avatar management system according to claim 1 or 2, wherein
the authentication object that is present in the digital space provided as the network service is displayed so as to cause a change in a predetermined manner.

6. The avatar management system according to claim 5, wherein
the authentication object is displayed so as to cause a change in a predetermined manner over time.

7. The avatar management system according to claim 5, wherein
the authentication object is displayed so as to cause a change in a predetermined manner in response to occurrence of a predetermined trigger.

8. The avatar management system according to claim 1 or 2, wherein
the object authenticity certification information is a digital watermark to be embedded in data of the corresponding authentication object.

9. The avatar management system according to claim 1 or 2, wherein
the object authenticity certification information is a non-fungible token (NFT) assigned in association with the corresponding authentication object.

10. The avatar management system according to claim 1 or 2, wherein
the object authenticity certification information is non-transferable certification information assigned in association with the corresponding authentication object.

11. The avatar management system according to claim 10, wherein
the non-transferrable certification information is a soul bound token (SBT).

12. The avatar management system according to claim 10, wherein
the non-transferrable certification information is verifiable credentials (VC).

13. The avatar management system according to claim 1 or 2, wherein
the object authenticity certification information is an obfuscated program assigned in association with the corresponding authentication object.

14. The avatar management system according to claim 1 or 2, wherein
the object authenticity certification information is provided with the corresponding authentication object to guarantee authenticity of a qualification to be held by the avatar.

15. An avatar management method in an avatar management system, comprising
an authentication object generation step in which an authentication object generation section generates an authentication object that certifies predetermined matters related to an avatar that can be used in a network service provided on a network; and
an object authenticity certification information assignment step in which an object authenticity certification information assignment section assigns object authenticity certification information that certifies authenticity of the authentication object generated in the authentication object generation step.

16. A program that causes a computer in an avatar management system to function
as an authentication object generation section that generates an authentication object that certifies predetermined matters related to an avatar that can be used in a network service provided on a network; and
as an object authenticity certification information assignment section that assigns object authenticity certification information that certifies authenticity of the authentication object generated by the authentication object generation section.
